**Europäisches Patentamt**

**European Patent Office**

**Office européen des brevets**

(19)

(11) Publication number : **0 365 689 B1**

# EUROPEAN PATENT SPECIFICATION

(12)

(45) Date of publication of patent specification :
**03.02.93 Bulletin 93/05**

(51) Int. Cl.⁵ : **H02K 1/27, H02K 21/14**

(21) Application number : **89905202.1**

(22) Date of filing : **19.04.89**

(86) International application number :
**PCT/JP89/00420**

(87) International publication number :
**WO 89/10653 02.11.89 Gazette 89/26**

(54) **SYNCHRONOUS MOTOR.**

(30) Priority : **30.04.88 JP 105428/88**

(43) Date of publication of application :
**02.05.90 Bulletin 90/18**

(45) Publication of the grant of the patent :
**03.02.93 Bulletin 93/05**

(84) Designated Contracting States :
**DE FR GB**

(56) References cited :
**EP-A- 0 131 632
CH-A- 670 018
DE-A- 3 239 665
GB-A- 2 075 274
JP-A-60 226 749
US-A- 4 642 502**

(73) Proprietor : **FANUC LTD.**
**3580, Shibokusa Aza-Komanba, Oshino-mura
Minamitsuru-gun, Yamanashi 401-05 (JP)**

(72) Inventor : **IWAMATSU, Noboru Fanuc Mansion
Harimomi 7-309
3539-1, Shibokusa Oshino-mura
Minamitsuru-gun Yamanashi 401-05 (JP)**
Inventor : **ENDO, Yuichi Fanuc Dai-3
Vira-karamatsu
3527-1, Shibokusa Oshino-mura
Minamitsuru-gun Yamanashi 401-05 (JP)**

(74) Representative : **Mock, Hans et al
MARKS & CLERK Suite 301 Sunlight House
Quay Street
Manchester M3 3JY (GB)**

EP 0 365 689 B1

## Description

### TECHNICAL FIELD

The present invention relates to a synchronous motor having a three-phase star connection which is supplied with a sine wave power and provides a large output torque although small in size.

### BACKGROUND ART

In the prior art, (e.g. EP-A-131632), the profile of a magnetic pole is a gap between an armature and a magnetic pole is sinusoidal to obtain a smooth operation of a synchronous motor driven by three-phase-sine-waves.

In actuality, however a magnetic flux distribution other than a sinusoidal distribution in the gap exists, by which a counterelectromotive force between terminals among terminals of a three-phase star connection is made be sinusoidal when three-phase windings of the armature are connected in this star connection manner. The size and configuration of the prior magnetic pole is restricted, to make the distribution of the magnetic flux in the gap sinusoidal, and therefore, the magnetic pole is not always satisfactory in view of a required increase of an output torque. Further even if an intensity of a magnetic field generated by the magnetic pole is raised, in an attempt to increase the output torque, the raising of the output torque is saturated due to the presence of a saturation magnetic flux density which is an original characteristic of the materials of a stator core or a yoke existing on a magnetic path.

### DISCLOSURE OF THE INVENTION

Accordingly, an object of the present invention is to increase an output torque and to obtain a smooth rotation, without raising the maximum density of a magnetic flux in the gap.

In view of the above object, the present invention provides a synchronous motor having a three-phase star connection which is supplied with a sine wave power, and a field system having an N-pole and an S-pole are alternately arranged thereon, characterized in that a distribution of a magnetic flux in a gap clearance between an armature and the field system is produced by summing up a sine wave having a fundamental period which corresponds to a pitch at which a pair of magnetic poles consisting of the N-pole and the S-pole are arranged adjacent to each other and higher harmonics of three times order of a natural number N.

When a distribution of the magnetic flux in the gap is produced by adding higher harmonics of $3 \cdot N$ order to a sine wave having a fundamental period which is a pitch of a pair of magnetic poles consisting of an N-pole and S-pole adjacent to each other in a three-phase synchronous motor having a star connection, a counterelectromotive force between each two terminals among terminals of the star connection is a sine wave, because said higher harmonics of $3 \cdot N$ order are cancelled at each two phases of three phases. Therefore, a smooth rotation is achieved as torque ripple is reduced in a synchronous motor when a size and a configuration of the magnetic pote is formed so that higher harmonics of $3 \cdot N$ order are added to a fundamental sine wave to produce a distribution of a magnetic flux in the gap generated by the magnetic pole. Furthermore, an amount of magnetic flux is increased to enable a large output torque to be obtained without raising the maximum density of a magnetic flux in the gap.

### BRIEF DESCRIPTION OF THE DRAWINGS

Figure 1 is an explanatory view of a distribution of a magnetic flux of a magnetic pole of a magnet as a first embodiment according to the present invention;

Figure 2 is a view of an experimental counterelectromotive force when the magnet shown in Fig. 1 is used;

Figure 3 is a plan view of the prior magnet showing a profile thereof;

Figure 4 is a view of a distribution of a magnetic flux generated by the magnet shown in Fig. 1;

Figure 5 is a view showing an output torque obtained by simulation analysis when the magnet shown in Fig. 1 is used;

Figure 6 is a view of a distribution of a magnetic flux generated by the magnet shown in Fig. 3;

Figure 7 is a view showing an output torque obtained by simulation analysis when the magnet shown in Fig. 3 is used; and

Figure 8 is a partial sectional view showing a yoke magnetic pole as a second embodiment according to the present invention.

### BEST MODE OF CARRYING OUT THE INVENTION

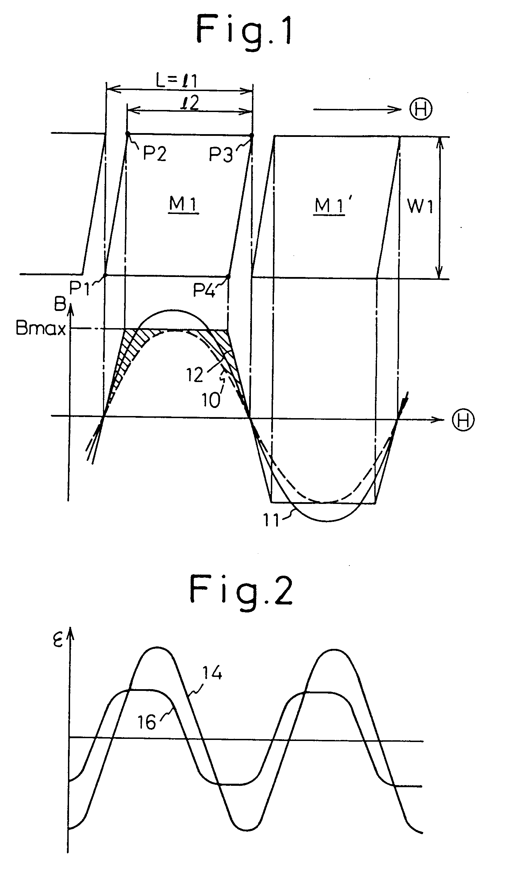

The present invention will be described in detail hereinafter according to the embodiments shown in the attached drawings. Figure 1 shows an expanded plan view of a magnetic pole of a magnet applied on a surface of a rotor as a field system in a synchronous motor having a three-phase star connection which is supplied with a sine wave power according to the present invention, with a distribution of a magnetic flux generated by the magnet. In the embodiment, the magnet M1 (M1′) has the shape of a parallelogram, and a pitch L of the magnets in a circumferential direction $\bigoplus$ of the rotor coincides with a maximum width $\ell 1$ of the magnet M1 in the same direction. It is apparent that a distribution B of the magnetic flux of the magnet M1 has a trapezoid shape with a top side thereof being a constant value in the circumferential direction Ⓗ between points P2 and P4. A comparison of the distribution of a magnetic flux shown by the trapezoid wave 12 and a sine wave distribution 10 of a magnetic flux shown by a dotted line 10, a maximum density of a magnetic flux thereof being the same as that of the trapezoid wave, will be mentioned later. The wave remaining after the higher harmonics of 3·N order are subtracted from the trapezoid wave 12 is substantially equal to the sine wave 11. Therefore, a counterelectromotive force generated by the distribution of the magnetic flux shown by the trapezoid wave 12 is substantially equal to a counterelectromotive force generated by the sine wave distribution 11. From this point of view, the trapezoid wave 12 is equal to the sine wave 11.

A counterelectromotive force measured at each two phase terminals is a sine wave 14, as shown in Fig. 2, when a rotor provided with a magnet M1 rotates because the high harmonics of 3·N order cancel each other out due to a shift by an electric angle of $2\pi/3$ in each phase U, V, W in the case of a three-phase connection when a distribution of a magnetic flux in the gap is substantially equal to the trapezoid wave produced by adding the higher harmonics of 3·N (N is a natural number) order to a sine wave having a fundamental period corresponding to the arrangement angular pitch of a pair of magnets M1 and M1′ adjacent to each other, that is, a width 2 x $\ell$1. Figure 2 shows a counterelectromotive force of a trapezoid wave 16 generated in one phase and the counterelectromotive force of the sine wave 14 measured at each two phase terminals U-V, V-W, W-U, which two waves are obtained experimentatly. An analysis of the counterelectromotive forces 14 and 16 is effected by an FFT analyzer whereby higher harmonics of 3·N order are seen in the counterelectromotive force 16 of one phase, but are not seen in the counterelectromotive force 14 between two phase terminals.

A larger magnetic flux by an amount corresponding to a hatched area in the case of the trapezoidal distribution 12 of a magnetic flux in the gap produced by the magnet M1 (P1P2P3P4) shown in Fig. 1, than in the case of the prior distribution of an ideal sine wave shown by a dotted line 10, is obtained, and thus a larger output torque is obtained. A sine wave distribution having the same effect as that of the trapezoidal distribution 12 of a magnetic flux in the gap is a sine wave 11 equivalent to the trapezoidal distribution 12 of a magnetic flux as mentioned above, and in this case, the maximum density $B_{max}$ of a magnetic flux becomes large. A saturated density of a magnetic flux exists in a material such as a steel constructing a core or a yoke. When a density of a magnetic flux in the gap is high, the high density of a magnetic flux does not necessarily contribute to an output torque, therefore, the trapezoidal distribution of a magnetic flux wherein the maximum density $B_{max}$ of the magnetic flux is small and the amount of the magnetic flux is large is preferred.

The measurement of the counterelectromotive force shown in Fig. 2 is made on a synchronous motor having 108 slots and 24 poles, wherein a dimension $\ell$1 corresponds to 4.5 slots and a dimension $\ell$2 to 3.7 slots. The ratio of the dimensions is a design value in view of the reduction of a cogging torque and the raise of an amount of a magnetic flux. A rotor provided with the magnet M1 may be positioned inside or outside of a motor. The present invention includes an embodiment in which the field system thereof mentioned above as a rotor is a stator.

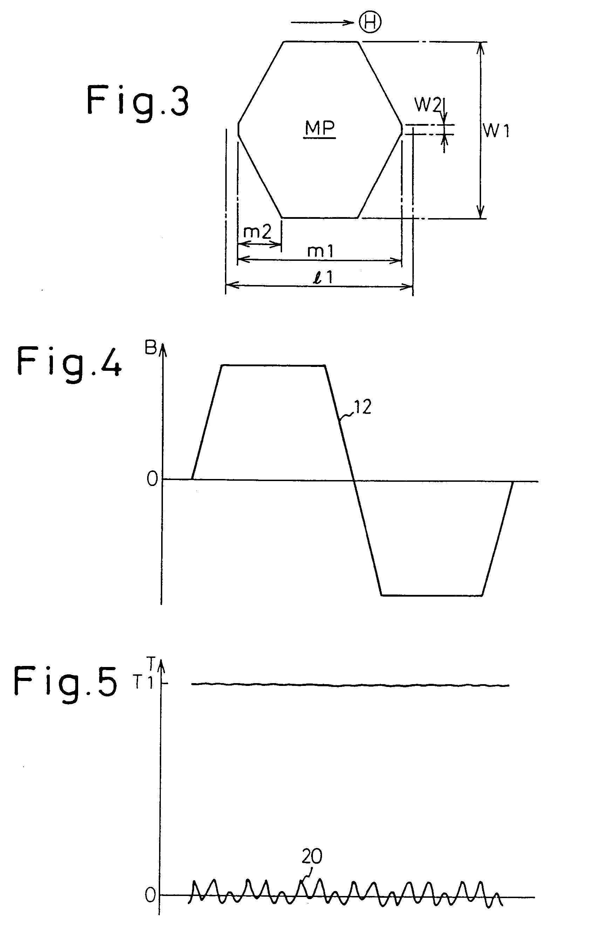

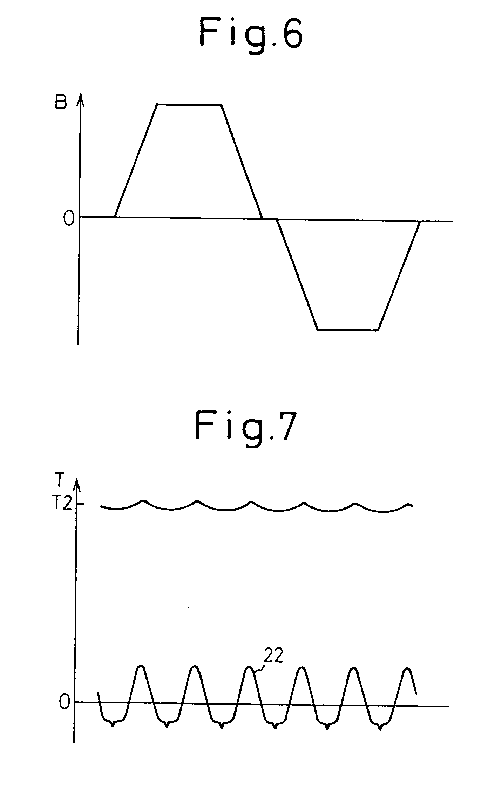

The output torques and torque ripples calculated by a simulation analysis for a synchronous motor provided with a magnet having the above-mentioned profile or a synchronous motor provided with a prior magnet shown in Fig. 3 is shown in Fig. 5 or Fig. 7. Figures 4 and 6 respectively show a distribution of a magnetic flux in the gap. Each torque ripple 20 or 22 in Fig. 5 or 7 is shown on a scale ten times larger than the corresponding mean output torque $T_1$ or $T_2$. A direction from the left to the right in Fig. 3 is the circumferential direction H of a rotor, and a pitch dimension of disposed magnets MP is $\ell$1. The prior motor has 108 slots and 24 poles similar to the motor provided with the compared magnet M1 shown in Fig. 1. The dimension $\ell$1 corresponds to 4.5 slots, and dimensions m1 and m2 correspond to 4.0 slots and 1.1 slots, respectively. An axial length W1 is the same as the length W1 shown in Fig. 1, and the ratio W2/W1 is 0.05. The ratio T1/T2 where T1 indicates a mean output torque when the magnet M1 shown in Fig. 1 is provided to a synchronous motor, and T2 indicates a mean output torque when the magnet MP shown in Fig. 3 is provided to a synchronous motor is 1.71/1.51. The ratios of torque ripples 20 and 22 for the corresponding mean output torques T1 and T2 are 1.2% and 3.1%, respectively.

As mentioned above, the dimension W1 of the magnet M1 according to the present invention shown in Fig. 1 is the same as the dimension W1 of the prior magnet MP shown in Fig. 3, so that the maximum densities of a magnetic flux in the gap are the same. Therefore, an output torque is raised and the torque ripple is reduced when a magnet according to the present invention is used.

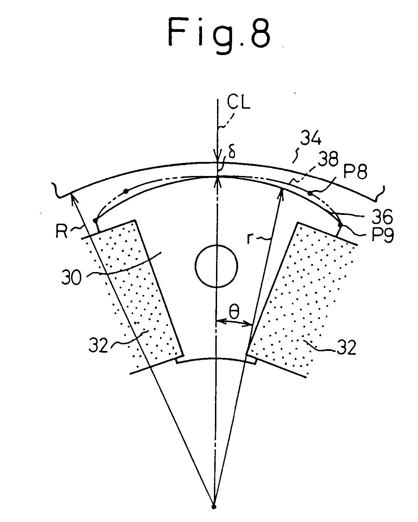

Another synchronous motor is shown in Fig. 8 as a second embodiment, wherein a yoke 30 is held between magnets 32. In this case, a yoke 30 acts as a magnetic pole, and a profile of an outer surface 36 of the yoke 30 was obtained from the following equation of the prior art to make a distribution of a magnetic flux in the gap between the yoke and an armature 34 sinusoidal.

$$r = R - \delta/\cos(m.\theta)$$

wherein,

r: a radial dimension from a center of a field system to the outer surface 36 of the yoke 30,

R: an inner radius of the armature 34,

$\delta$: a dimension of a gap between the outer surface 36 of the yoke 30 and an inner surface of the armature 34 on a center line CL of the yoke 30,

$\theta$: an angular position of a radial line designated by r on the basis of an angular position of the center line CL,

m: 1/2 of the number of poles.

A distribution of a magnetic flux in the gap is sinusoidal, due to the profile of the outer surface 36 of the yoke 30, but a torque ripple is not increased even though higher harmonics of 3·N order are superposed on the sinusoidal distribution of a magnetic flux as explained above. Namely, a substantially trapezoidal distribution of a magnetic flux may be generated, and for this purpose, an outer surface of the yoke 30 has a profile such that a gap dimension is constant between a center position CL and position P8, and therefrom is linearly increased up to an end point P9 of the yoke different from the prior outer surface 36. When a synchronous motor has 108 slots and 24 poles as in the forementioned simulation analysis and an arrangement pitch of every two adjacent magnetic poles is expressed by an electrical phase angle of 360 degrees, it is seen by a simulation analysis for the synchronous motor where an angular position of the end point P9 of the yoke 30 on the basis of the center line CL corresponds to an electrical phase angle of 70 degrees that the case in which the angular position P8 on the basis of the center line CL corresponds to an electrical phase angle of 60 degrees is the best.

The effective amount of a magnetic flux can be increased without change of the maximum density of a magnetic flux in the gap in the synchronous motor shown in Fig. 8 and Fig. 1. The maximum density of a magnetic flux in the gap when the yoke has a profile according to the present invention is reduced compared with the yoke having the prior configuration shown by the line 36 while a magnet 32 in the prior art is the same as in the present case. Therefore, a trapezoidal distribution of a magnetic flux can be generated which has a maximum density of a magnetic flux which is less than the maximum density of a magnetic flux having a sinusoidal distribution produced by the prior yoke, and a generated amount of a magnetic flux also can be increased, for example, by making the magnet longer in the radial direction of a field system.

It is apparent from the foregoing description that an amount of a magnetic flux can be raised without raising the maximum density of a magnetic flux, according to the present invention, so that an output torque can be effectively increased and a synchronous motor having a three-phase star connection, which is supplied with a sine wave power and reduces torque ripple, can be provided.

## Claims

1. A synchronous motor supplied with a sine wave power, which motor has a three-phase star connection and a field system (M1, M1') having an N-pole and an S-pole alternatively arranged thereon, characterized in that a distribution (10) of a magnetic flux in a gap clearance between an armature and the field system (M1, M1') is produced by summing up a sine wave (11) having a fundamental period which corresponds to a pitch at which a pair of magnetic poles (M1, M1') consisting of the N-pole and the S-pole are arranged adjacent to each other and higher harmonics of three times order of a natural number N.

2. A synchronous motor according to claim 1, wherein said field system has a plurality of magnets stuck onto a surface thereof, each of which has the shape of a parallelogram.

3. A synchronous motor according to claim 2, wherein the maximum angular width of each of said magnets which is arranged along an arc of said field system coincides with a pitch of said magnets along said arc.

4. A synchronous motor according to claim 1, wherein said field system is a field system having a yoke (30) held by magnets (32), and wherein a gap dimension between said yoke and an armature is constant between a central angular position of said yoke and a prescribed angular position, and increases linearly from the prescribed angular position up to an end position of said yoke (30).

## Patentansprüche

1. Synchronmotor mit sinusförmiger Stromversorgung, in Drei-Phasen-Sternschaltung und einem Feldsystem (M1, M1'), wobei ein N-Pol und ein S-Pol abwechselnd angeordnet sind, dadurch gekennzeichnet, daß eine Verteilung (12) eines magnetischen Flusses im Spaltabstand zwischen Rotor und dem Feldsystem (M1, M1') erzeugt ist durch die Summation einer Sinuswelle (11) mit einer Grundperiode, die einem Teilungsabstand entspricht, mit welchem ein Paar Magnetpole (M1, M1'), bestehend aus dem N-Pol und dem S-Pol, zueinander angrenzend angeordnet sind, und höheren Harmonischen der dreifachen Größenordnung einer natürlichen Zahl (N).

2. Synchronmotor nach Anspruch 1, wobei das Feldsystem eine Vielzahl von an einer Oberfläche desselben haftende Magneten aufweist, von denen jeder die Form eines Parallelogramms hat.

3. Synchronmotor nach Anspruch 2, wobei die maximale Winkelbreite jeder der Magnete, der längs eines Bogens des Feldsystems angeordnet ist, mit dem Teilungsabstand der Magnete längs dieses Bogens übereinstimmt.

4. Synchronmotor nach Anspruch 1, wobei das Feldsystem ein Feldsystem mit einem von Magneten (32) gehaltenem Joch (30) ist und der Spaltabstand zwischen dem Joch und einem Rotor zwischen einer zentralen Winkelposition des Jochs und einer vorgegebenen Winkelposition konstant ist und sich linear von der vorgegebenen Winkelposition bis zu einer Endposition des Jochs (30) vergrößert.

**Revendications**

1. Moteur synchrone alimenté par une puissance sinusoïdale, lequel moteur possède un couplage triphasé en étoile et un inducteur (M1, M1') ayant un pôle de N et un pôle de S agencés en alternance sur celui-ci, caractérisé en ce qu'une distribution (12) de flux magnétique dans une distance d'espacement entre un induit et l'inducteur (M1, M1') est produite par l'addition d'une onde sinusoïdale (11) ayant une période fondamentale qui correspond à l'intervalle auquel une paire de pôles magnétiques (M1, M1') consistant en le pôle de N et le pôle de S sont agencés adjacents l'un à l'autre et des harmoniques supérieurs du troisième ordre d'un entier naturel N.

2. Moteur synchrone selon la revendication 1, dans lequel ledit inducteur présente une pluralité d'aimants collés sur la surface de celui-ci, dont chacun a la forme d'un parallélogramme.

3. Moteur synchrone selon la revendication 2, dans lequel la largeur angulaire maximale de chacun desdits aimants qui est agencé le long d'un arc dudit inducteur coïncide avec un intervalle desdits aimants le long dudit arc.

4. Moteur synchrone selon la revendication 1, dans lequel ledit inducteur est un inducteur ayant une culasse (30) maintenue par des aimants (32), et dans lequel une dimension de distance entre ladite culasse et un induit est constante entre une position angulaire centrale de ladite culasse et une position angulaire prescrite, et augmente linéairement depuis la position angulaire prescrite jusqu'à une position d'extrémité de ladite culasse (30).

# Fig.1

# Fig.2

## Fig.3

## Fig.4

## Fig.5

# Fig.6

# Fig.7

# Fig.8